# EUROPEAN PATENT SPECIFICATION

(11) **EP 1 895 784 B1**
(45) Date of publication and mention of the grant of the patent: **04.11.2009**
(21) Application number: 06120025.9
(22) Date of filing: 01.09.2006
(51) Int. Cl.: H04L 12/58, H04W 88/04

(54) **A method of relaying an electronic message to a handheld electronic device beyond the coverage area of a wireless network**
Verfahren zur Weiterleitung einer elektronischen Nachricht an eine tragbare elektronische Vorrichtung außerhalb des Deckungsbereiches eines drahtlosen Netzes
Procédé permettant de relayer un message électronique à un dispositif électronique portatif au-delà de la zone de couverture d'un réseau sans fil

(43) Date of publication of application: 05.03.2008
(73) Proprietor: Research In Motion Limited, Waterloo, Ontario N2L 3W8 (CA)
(72) Inventor: Tao, Jimmy, British Columbia V3N 1K2 (CA)
(74) Representative: Hibbert, Juliet Jane Grace

(56) References cited:
- EP-A- 1 207 707
- EP-A1- 1 241 900
- EP-A1- 1 259 036
- WO-A2-98/39936
- US-A1- 2003 162 554

## Description

### BACKGROUND

### Field

The disclosed and claimed concept relates generally to handheld electronic devices and, more particularly, to a method of transmitting a message to a handheld electronic device that is beyond the coverage area of a wireless network.

### Description of the Related Art

Numerous types of handheld electronic devices are known. Examples of such handheld devices include, for instance, personal data assistants (PDAs), handheld computers, two-way pagers, cellular telephones, and the like. Many handheld electronic devices also feature wireless communication capability, although many such handheld devices are stand-alone devices that are functional without communication with other devices. Examples of such handheld electronic devices are provided in U.S. Patent Nos. 6,452,588 and 6,489,950 and also European patent application Nos. EP 1207707 (A1) and 1241900 (A1). EP 1207707 (A1) relates to a carry on service which allows a mobile device adapted for wireless communication over a permanent communication network to carry information objects on behalf of other devices. Carry on information objects are transferred from a carry on user device over a wireless ad-hoc network to a carry on provider device. There, they are stored until they can be forwarded to a carry on gateway device of the permanent communication network. This device forwards the carry on information objects to an appropriate service. The service provider checks the received information objects and executes the contained service requests. In EP 1241900 (A1), when information is delivered to a receiver mobile communication terminal, an update unit updates delivery status data stored in first storage, from "undelivered" to "delivered" in response to an update request from a relay when check permission data stored in second storage 30 is "permitted." When in this state a sender terminal issues a check request for the delivery status data, a sending unit sends the delivery status data of "delivered" status to the sender terminal. When the check permission data is set as "prohibited," the delivery status data is not updated to the delivered status even if the receiver has received the information.

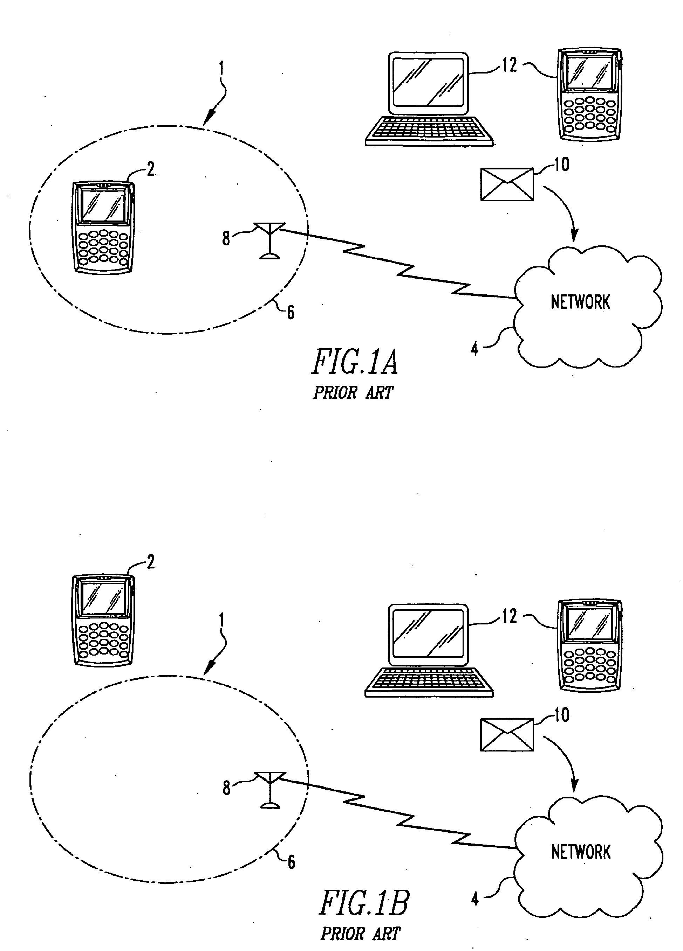

Referring to FIG. 1A, a wireless network 1 that includes a handheld electronic device 2 that is able to wirelessly communicate with a network 4, such as a data network, when the handheld electronic device 2 is within the coverage area (communication range) 6 of a wireless Access Point 8 that is in electronic communication with the network 4. While the handheld electronic device 2 is within the coverage area 6 of the Access Point 8, the handheld electronic device 2 is able to receive an electronic message (e.g. e-mail message) 10 that was sent from a sending source such 12 as, without limitation, a remote device. As can be seen from this figure, the electronic message 10 is transmitted from the remote device 12 to the network 4 which then transmits the electronic message 10 to the Access Point 8. From the Access Point 8 the electronic message 10 is transmitted to the handheld electronic device 2. The shortcoming to this wireless network 1 is that the handheld electronic device 2 is unable to receive the electronic message 10 when the handheld electronic device 2 is not within (*i.e*. beyond or outside of) the coverage area 6 of the Access Point 8 (see FIG. 1B). For instance, the handheld electronic device 2 might be located in a rural area. In order to overcome this shortcoming, additional Access Points 8 may be deployed in order to increase the total coverage area of the network 4. The costs associated with deploying additional Access Points 8, however, can be time consuming and monetarily prohibitive.

### BRIEF DESCRIPTION OF THE DRAWINGS

A full understanding of the disclosed and claimed concept can be gained from the following Description when read in conjunction with the accompanying drawings in which:

FIGS. 1A and 1B are schematic diagrams of a wireless network having an Access Point, which is in electronic communication with a network, and a handheld electronic device that is either within the coverage area of the Access Point (FIG. 1A) or outside/beyond the coverage area of the Access Point (FIG. 1B);

FIGS. 2A, 2B, 2C, 2D, and 2E are schematic diagrams of a wireless network in accordance with various embodiments of the disclosed and claimed concept;

FIG. 3 is top plan view of an embodiment of the handheld electronic device; and

FIG. 4 is a schematic of the handheld electronic device of FIG. 3.

### DESCRIPTION

As employed herein, the phrase "a number" and variations thereof means one or an integer greater than one (*i.e*., a plurality).

As employed herein, the term "WiFi" means by way of example, and not limitation, a wireless fidelity standard such as IEEE 802.11b, 802.11 g, or 802.11 a.

As employed herein, the term "Access Point" or "Base Station" means a device that receives data from a network and wirelessly transmits the data for subsequent receipt by one or more devices.

When referring to any numerical range of values, such ranges are understood to include each and every number and/or fraction between the stated range minimum and maximum.

Directional phrases used herein, such as, for example, upper, lower, left, right, vertical, horizontal, top, bottom, above, beneath, clockwise, counterclockwise and derivatives thereof, relate to the orientation of the elements shown in the drawings and are not limiting upon the claims unless expressly recited therein.

The improved wireless network 14 is similar to the wireless network 1 shown in FIGS. 1A and 1B in that it includes a network 4 that is in electronic communication with at least one Access Point 8. If a handheld electronic device 2 is not within the coverage area of an Access Point 8, the handheld electronic device 2 is unable to directly receive electronic messages 10 from the network 4. The disclosed concept provides for an improved wireless network 14 that allows a handheld electronic device 2 to receive electronic messages 10 despite being outside of the coverage area of an Access Point that is connected to the network 4 by utilizing peer handheld electronic devices as rallying points for transmitting the electronic messages 10 to the handheld electronic device 2.

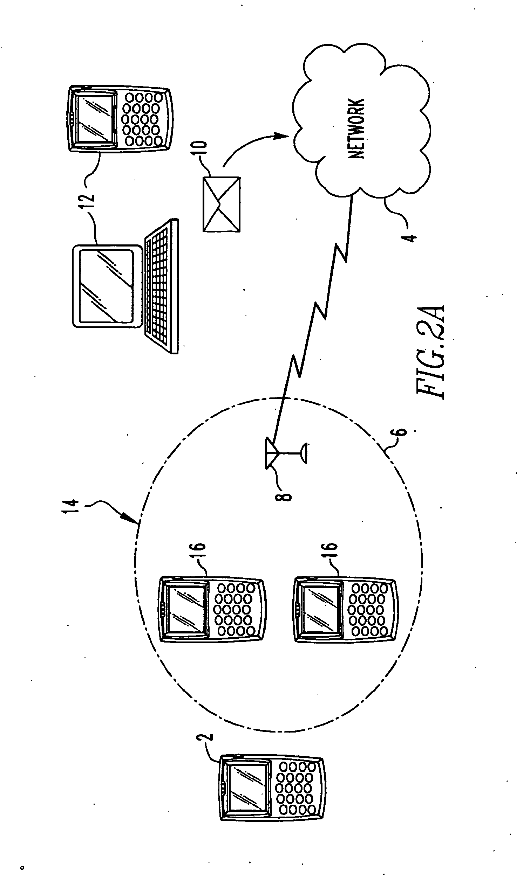

As can be seen from FIG. 2A, an Access Point 8 is in electronic communication with a network 4, such as a data and/or a voice network. Similar to FIG. 1A, the network 4 can receive a number of electronic messages 10, which are intended for the handheld electronic device 2, from a number of sending sources 12. It should be noted, however, that while FIG. 2A depicts the sending sources 12 as being located remotely from the network 4, other sending sources 12, such as various computing devices, local to the network 4 also fall within the scope of the disclosed and claimed concept. As can be seen from this figure, the electronic message 10 is transmitted from the sending source 12 to the network 4 which transmits the electronic message 10 to the Access Point 8. Typically, the electronic message 10 is then transmitted from the Access Point 8 to the handheld electronic device 2. As can be seen from FIG. 2A, however, the handheld electronic device 2 is not within the Access Point's 8 coverage area 6. Accordingly, the Access Point 8 would not be able to directly transmit the electronic message 10 to the handheld electronic device 2.

In order to allow the handheld electronic device 2 to receive the electronic message 10 that was transmitted to the network 4, a number of peer handheld electronic devices 16 are employed as rallying points for transmitting the electronic message 10 to the handheld electronic device 2. Referring to FIG. 2A, when the network 4 determines that the electronic message 10 cannot be transmitted directly to the handheld electronic device 2 because the handheld electronic device 2 is not within the coverage area 6 of Access Point 8, the network 4 transmits a copy of the electronic message 10 to one or more peer handheld electronic devices (first peer handheld electronic devices) 16 that are within the coverage area 6 of the Access Point 8. Once the electronic message 10 has been transmitted to the first peer handheld electronic devices 16, the electronic message 10 is stored in the memory thereof. In order to protect the privacy of the user of the handheld electronic device 2, the electronic message 10 can be encrypted (according to any one of a number of known encryption schemes in which the handheld electronic device 2 would have a key for decrypting the message; such schemes may include, without limitation, symmetric (secret key) and/or asymmetric (public key) systems) to prevent unauthorized viewing of the electronic message 10 by the users of the first peer handheld electronic devices 16.

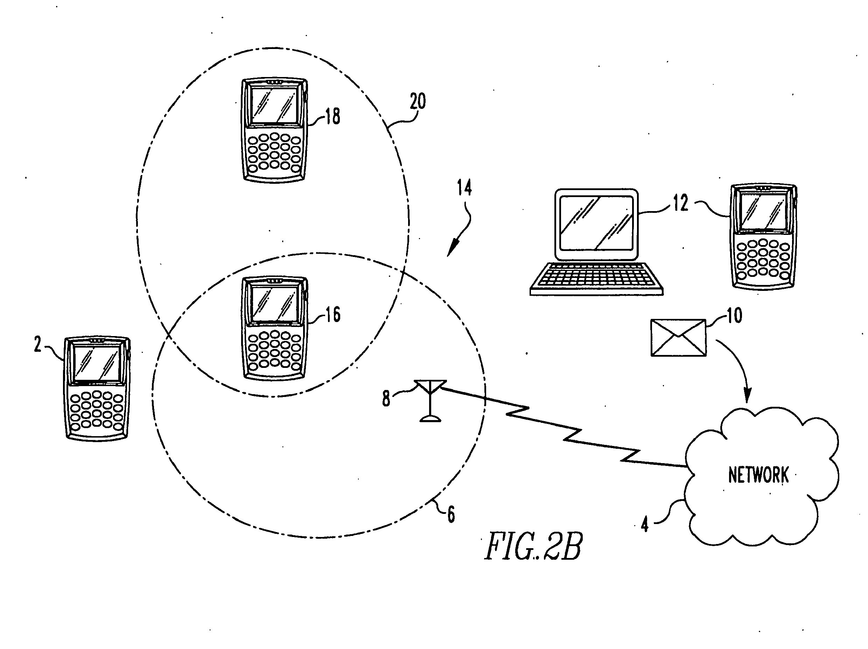

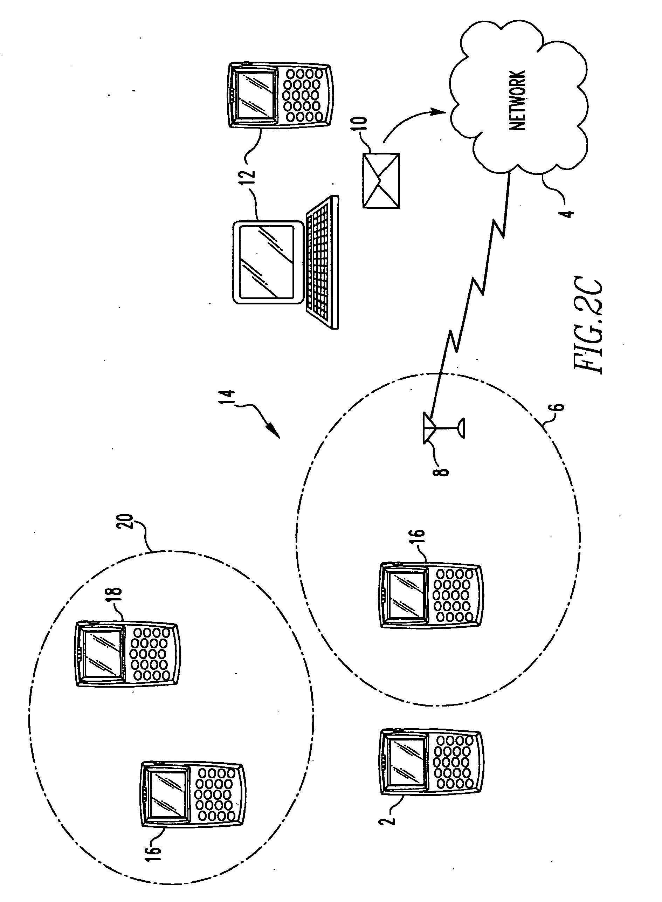

Referring to FIG. 2B, after the electronic message 10 has been transmitted and stored on the first peer handheld electronic device 16, the first peer handheld electronic device 16 can also transmit a copy of the electronic message 10 to one or more additional peer handheld electronic devices (second peer handheld electronic devices) 18 when the first peer handheld electronic device 16 is within communication range 20 of the second peer handheld electronic devices 18 thereby increasing the total number of rallying points used to forward the electronic message 10 to the electronic handheld device 2. The system utilized to transfer the electronic message 10 between first and second peer handheld electronic devices 16,18 (hereinafter, referred collectively as peer handheld electronic devices) can include, but shall not be limited to, Bluetooth, Infrared, and/or WiFi. As can be seen from FIGS. 2B and 2C, a first peer handheld electronic device 16 can transmit the electronic message 10 to a second peer handheld electronic device 18 regardless of whether the first peer handheld electronic device 16, after receiving the electronic message 10 from the Access Point 8, is within or outside of the Access Point's 8 coverage area 6. After the second peer handheld electronic device 18 receives the transmitted electronic message 10, the electronic message 10 is stored in the memory of the second peer handheld electronic device 18 and can be encrypted for security/privacy purposes.

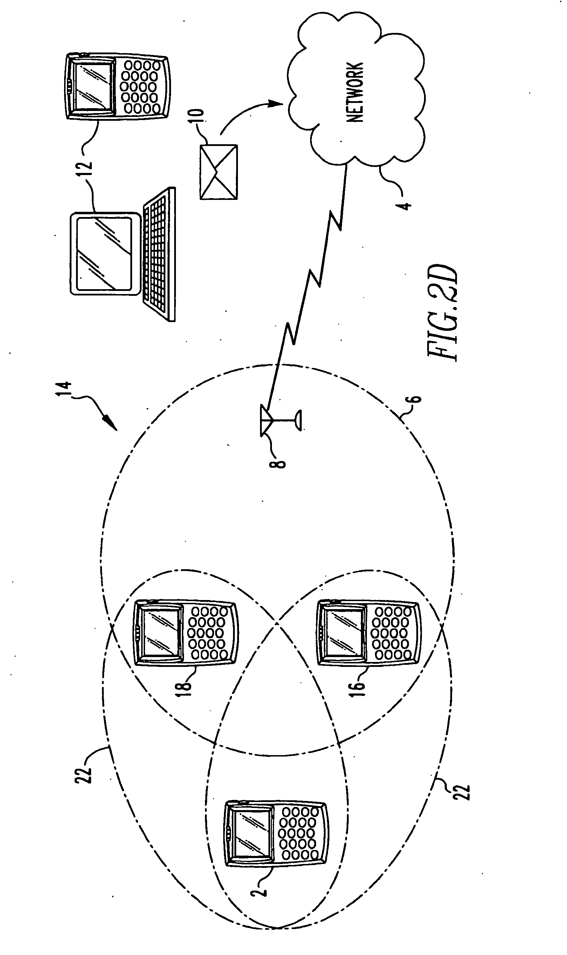

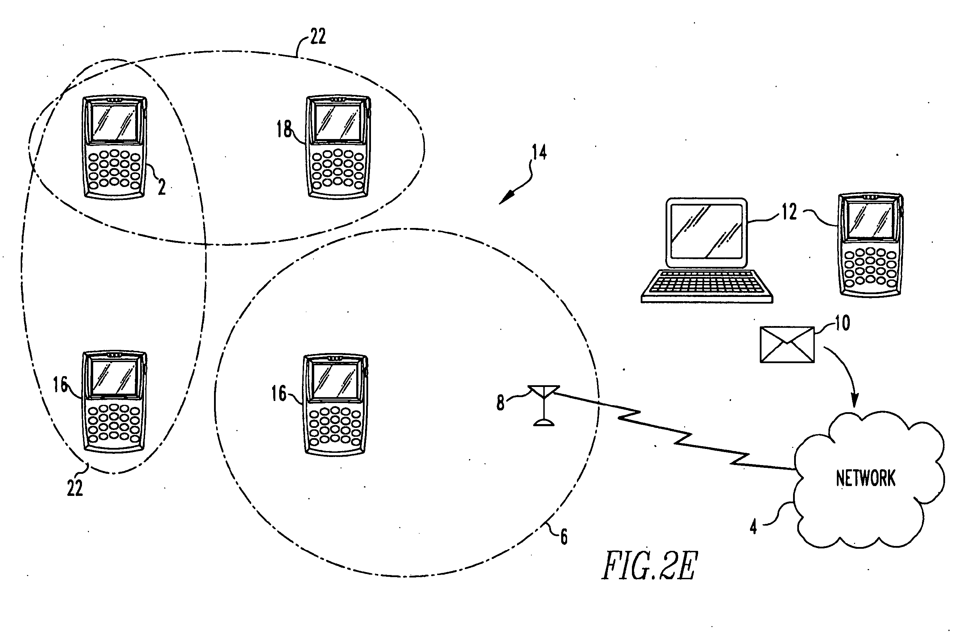

Referring to FIGS. 2D and 2E, when the first or second peer handheld electronic device 16,18 is within communication range 22 of the handheld electronic device 2, the first or second peer handheld electronic device 16,18 will attempt to transmit the electronic message 10 to the handheld electronic device 2. It should be noted that the first or second peer handheld electronic device 16,18, while attempting to transmit the electronic message 10 to the handheld electronic device 2, can either be within or beyond the coverage area 6 range of the Access Point 8. Similar to the transmission of the electronic message 10 between the peer handheld electronic devices 16,18, the system used to transmit the electronic message 10 from the first or second peer handheld electronic device 16,18 to the handheld electronic device 2 can include, but shall not be limited to, Bluetooth, Infrared, and/or Wifi. Once the entire electronic message 10 has been received and stored in the handheld electronic device's 2 memory, the handheld electronic device 2 will transmit a confirmation signal to the first or second peer handheld electronic device 16,18 verifying that the entire electronic message 10 has been received. If the electronic message 10 was not successfully transmitted to the handheld electronic device 2 or not successfully transmitted in its entirety, the handheld electronic device 2 will transmit a signal to the first or second peer handheld electronic device 16,18 requesting that the first or second peer handheld electronic device 16,18 re-transmit the electronic message 10. After the handheld electronic device 2 has successfully received the electronic message 10, the handheld electronic device 2, assuming that the electronic message 10 has been encrypted, will decrypt the electronic message 10 so that the user of the handheld electronic device 2 may view the electronic message 10. Otherwise, the user will be able to view the electronic message 10 once the electronic message 10 has been stored in the handheld electronic device's 2 memory. In the event that the electronic message 10 is transmitted to the incorrect handheld electronic device 2 decryption of the electronic message 10 will fail thereby preventing unauthorized viewing of the electronic message 10.

After the electronic message 10 has been received by the handheld electronic device 2, the handheld electronic device 2 can prevent other peer handheld electronic devices 16,18 from transmitting the electronic message 10 to the handheld electronic device 2. This may be accomplished by transmitting a signal to these peer handheld electronic devices 16,18, when the peer handheld electronic devices 16,18 are within communication range 22 of the handheld electronic device 2, which indicates to peer handheld electronic devices 16,18 that there is no need to transmit the electronic message 10 to the handheld electronic device 2 since the electronic message 10 has already been received. Additionally, the handheld electronic device 2, upon reentering the coverage area 6 of the Access Point 8, can also transmit a signal to the Access Point 8 that informs the network 4 that the electronic message 10 was received and that the network 4 should stop all future attempts to forward the electronic message 10 to the handheld electronic device 2 or to first peer handheld electronic devices 16 (for indirectly delivering to the handheld electronic device 2). For this purpose, in order to be able to uniquely identify and track each electronic message 10, the network 4 may assign a unique identifier to each message 10 (such as a serial number) before the message 10 is transmitted to a first peer handheld electronic device 16 for subsequent delivery as disclosed herein.

When the first or second peer handheld electronic device 16,18 that successfully transmitted the electronic message 10 to the handheld electronic device 2 is within communication range of the Access Point 8, the first or second peer handheld electronic device 16,18 will transmit a signal to the Access Point 8 that informs the network 4 that the electronic message 10 has been delivered to the handheld electronic device 2. Upon receipt of this signal, the network 4 will cease all future attempts to transmit the electronic message 10 to the handheld electronic device 2 or to the first peer handheld electronic devices 16. For instance, upon receipt of this signal the network 4 can update a message list showing that the electronic message 10 has been received by the handheld electronic device 2. In response to the updated list, the network 4 will then cease all future attempts to transmit the electronic message 10 to the first peer handheld electronic devices 16. Additionally, the network 4 can also transmit a signal to all peer handheld electronic devices 16,18 that are within communication range 6 of the Access Point 8 to stop all attempts to transmit the electronic message 10 to the handheld electronic device 2. In response, those peer handheld electronic devices 16,18 can delete the electronic message 10 from their memory. Furthermore, the updated message list can also instruct the network 4 not to attempt to transmit the electronic message 10 to the handheld electronic device 2 when the handheld electronic device 2 re-enters communication range of the Access Point 8.

In accordance with one embodiment of the disclosed and claimed concept, the first or second peer handheld electronic device 16,18 that successfully delivers the electronic message 10 to the handheld electronic device 2 will delete the electronic message 10 from the memory thereof upon receiving a confirmation signal from the handheld electronic device 2 that the electronic message 10 was received.

In accordance with another embodiment of the disclosed and claimed concept, the handheld electronic device 2, after receiving the electronic message 10, will transmit a signal to all peer handheld electronic devices 16,18 that are within communication range 22 of the handheld electronic device 2 to delete the electronic message 10 from their memory.

In accordance with another embodiment of the disclosed and claimed concept, the peer handheld electronic devices 16,18 will delete the electronic message 10 from memory after a predetermined time interval (during which they have not been able to successfully transmit the electronic message 10 to the handheld electronic device 2).

In accordance with another embodiment of the disclosed concept, each handheld electronic device 2 and peer handheld electronic device 16,18 must be pre-registered with the wireless network 14 as a member of that network 4. When so registered, each handheld electronic device 2 and peer handheld electronic device 16,18 will be assigned a unique identifier, such as a PIN or identification number. In this embodiment, the peer handheld electronic devices 16,18 can receive and attempt to deliver electronic messages 10 that are intended for a number of different handheld electronic devices 2. Accordingly, in this embodiment each electronic message 10 will have associated therewith (e.g. as part of or appended to the message) the identifier, such as a PIN or identification number, that corresponds to the particular handheld electronic device 2 for which the message 10 is intended. When a first or second peer handheld electronic device 16,18 is within communication range 22 of a handheld electronic device 2, electronic messages 10 that have an identifier that is associated with that particular handheld electronic device 2 are transmitted to the handheld electronic device 2 while electronic messages 10 that do not have a corresponding identifier are not transmitted. In this embodiment, when a first peer handheld electronic device 16 is within the coverage area 6 of the Access Point 8, it will receive a predetermined number of such electronic messages 10 intended for a number of the handheld electronic devices 2 for subsequently delivery as described above.

In accordance with another embodiment of the disclosed concept, the handheld electronic device 2 will only receive electronic messages 10 from peer handheld electronic devices 16,18 when the handheld electronic device 2 is transmitting a signal that informs the peer handheld electronic devices 16,18 that the handheld electronic device 2 is configured to receive electronic messages 10. For instance, the first or second peer handheld electronic device 16,18 would not transmit the electronic message 10 to the handheld electronic device 2 until the first or second peer handheld electronic device 16,18 receives a signal that instructs the first or second peer handheld electronic device 16,18 to initiate the transmission of the electronic message 10.

In accordance with another embodiment of the disclosed and claimed concept, the network 4 could limit the total number of peer handheld electronic devices 16,18 that the electronic message 10 is transmitted to. For instance, the network 4 can transmit a signal, via the Access Point 8, to the first peer handheld electronic devices 16 instructing the first peer handheld electronic devices 16 not to transmit the electronic message to any second peer handheld electronic devices 18. In another instance, the network 4 could transmit a signal to the first peer handheld electronic devices 16 instructing the first peer handheld electronic devices to transmit the electronic message 10 to a certain number of second peer handheld electronic devices 18.

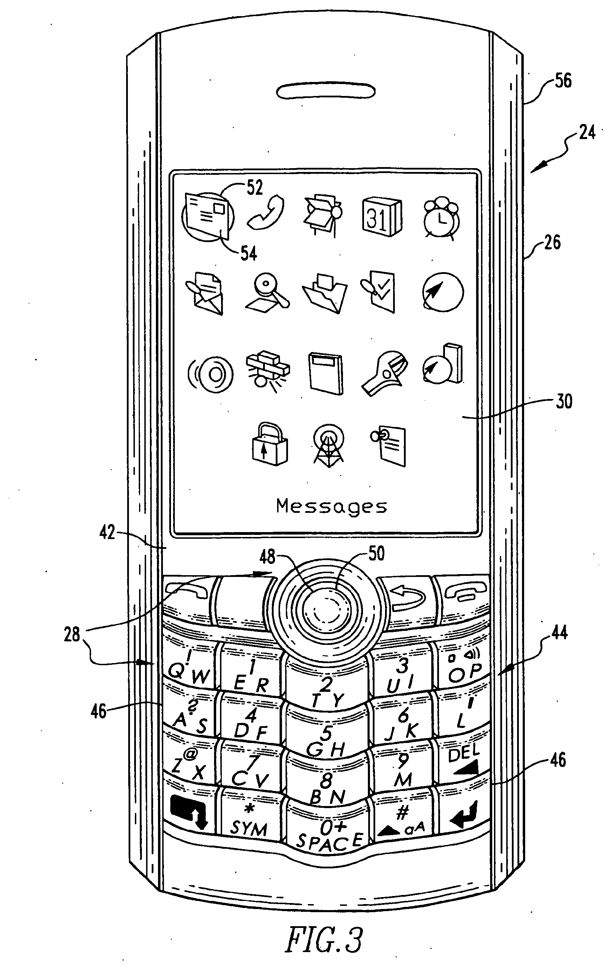

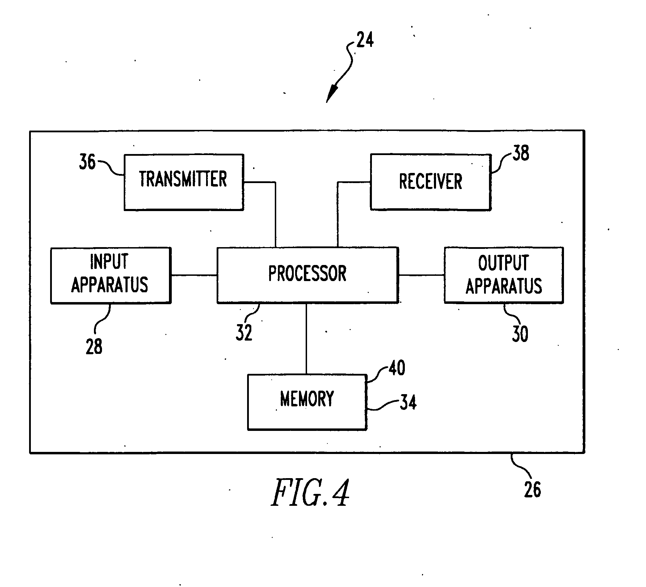

The handheld electronic device 2 and the peer handheld electronic devices 16,18 that are described above are represented in the form of an exemplary handheld electronic device 24 in FIG. 3 and depicted schematically in FIG. 4. The handheld electronic device 24 includes a housing 26 upon which are disposed a processor unit that includes an input apparatus 28, an output apparatus 30, a processor 32, a memory 34, a transmitter 36, and a receiver 38. The processor 32 may be, for instance, and without limitation, a microprocessor (µP) and is responsive to inputs from the input apparatus 28 and provides output signals to the output apparatus 30. The processor 32 also interfaces with the memory 34 which contains one or more routines 40 that are adapted to initiate the transmission or reception of the electronic messages 10 via the transmitter 36 or receiver 38, respectively.

Referring to FIG. 3, the front face 42 of the housing 26 includes a keypad 44 that is in the exemplary form of a reduced QWERTY keyboard having a plurality of keys 46 that serve as input members. It is noted, however, that the keypad 44 may be of other configurations, such as an AZERTY keyboard, a QWERTZ keyboard, or other keyboard arrangement, whether presently known or unknown, and either reduced or not reduced. Continuing with FIG. 3, the front face 42 of the housing 26 also includes a navigational tool 48. In this particular embodiment, the navigational tool 48 is a trackball 50 that can be rotated thereby allowing for the navigation of a cursor 52, which is displayed on the output apparatus 30, in various directions including up, down, left, right, and any combination thereof. Moreover, the trackball 50 can also be depressed. When the trackball 50 is depressed, a selection is made based upon the current location of the cursor 52. For example, if the cursor 52 is located over a given program icon 54, that program will be launched when the trackball 50 is depressed. It should be noted, however, that despite FIG. 3 depicting the navigational tool 48 as being disposed on the front face 42 of the housing 26, the navigational tool 48 can also be disposed on a side 56 of the housing 26. For example, a trackwheel (not shown), which is capable of being rotated and depressed, may be disposed on the side 56 of the housing 26 in lieu of the trackball 50. Rotation of the trackwheel can provide a navigation input, while depression of the trackwheel can provide a selection input. Accordingly, rotation of the trackwheel can navigate the cursor 52 over a particular program icon 54, while depression of the trackwheel can launch the program.

The accompanying figures and the description that follows set forth this disclosed and claimed concept in its preferred embodiments. It is, however, contemplated that persons generally familiar with wireless networks will be able to apply the novel characteristics of the structures and methods illustrated and described herein in other contexts by modification of certain details. Accordingly, the figures and description are not to be taken as restrictive on the scope of the disclosed invention, but are to be understood as broad and general teachings, the protective scope of the invention being defined by the appended claims.

## Claims

1. A method, in a system including a network (4) and at least one wireless access point (8) in electronic communication with said network, wherein a handheld electronic device (2) and a plurality of peer handheld electronic devices (16) are registered with said system for transmitting a message (10) to said handheld electronic device (2) when said handheld electronic device is not within communication range of said at least one wireless access point (8), comprising:
attempting to wirelessly transmit said message (10) from said network to said handheld electronic device (2) through said at least one wireless access point (8);
wirelessly transmitting said message (10) from said at least one wireless access point (8) to one or more of peer handheld electronic devices (16) that are within communication range of said at least one wireless access point;
wirelessly transmitting said message (10) from at least one of said one or more of said peer handheld electronic devices (16) to said handheld electronic device (2) when said at least one of said one or more of said peer handheld electronic devices is within communication range of said handheld electronic device; and
deleting said message (10) from said one or more peer handheld electronic devices (16) after said message has been transmitted to said handheld electronic device.

2. The method of claim 1, further comprising deleting said message (10) from said one or more peer handheld electronic devices (16) after a predetermined time interval.

3. The method of claim 1, wherein each of said one or more of said peer handheld electronic devices (16) store up to a predetermined number of additional messages, each of said additional messages being intended for a corresponding additional handheld electronic device registered with said network.

4. The method of claim 1, wherein said handheld electronic device (2) and said one or more peer handheld electronic devices (16) are each assigned an identifier, and wherein said message (10) includes said identifier that corresponds to said handheld electronic device.

5. The method of claim 1, wherein said one or more of said peer handheld electronic devices (16) comprises a first peer handheld electronic device and one or more additional peer handheld electronic devices, wherein said at least one of said one or more of said peer handheld electronic devices is said first peer handheld electronic device, and wherein the method further comprises preventing transmission of said message (6) from said one or more additional peer handheld electronic devices to said handheld electronic device (2) after said message has been transmitted to said handheld electronic device from said first peer handheld electronic device.

6. The method of claim 1, further comprising preventing transmission of said message (10) from said network to said handheld electronic device (2) through said at least one wireless access point (8) when said handheld electronic device is within a communication range of said at least one wireless access point after said message has been transmitted to said handheld electronic device from said at least one of said one or more of said peer handheld electronic devices.

7. The method of claim 1, wherein when said handheld electronic device (2) is in communication range of said at least one wireless access point (8), the method further comprises transmitting a signal from said handheld electronic device to said network through said at least one wireless access point and in response to receiving said signal, updating a message list in said network showing that said message has been delivered to said handheld electronic device.

8. The method of claim 7, further comprising responsive to updating said message list, stopping all attempts to transmit said message from said network to said handheld electronic device (2).

9. The method of claim 1, further comprising, prior to the step of wirelessly transmitting said message (10) from at least one of said one or more peer handheld devices (16), the step of:
transmitting a signal from said handheld electronic device to said at least one of said one or more of said peer handheld electronic devices, said signal instructing said at least one of said one or more of said peer handheld electronic devices to initiate said wirelessly transmitting step.

10. The method of claim 1, wherein said message (10) is encrypted.

11. The method of claim 1, wherein when a first one of said one or more of said handheld electronic devices (16) is within communication range of an additional one of said peer handheld electronic devices, the method further comprises wirelessly transmitting said message (10) from said first one of said one or more of said peer handheld electronic devices to said additional one of said peer handheld electronic devices, and wherein said step of wirelessly transmitting said message from at least one of said one or more peer handheld electronic devices to said handheld electronic device comprises wirelessly transmitting said message from at least one of said one or more of said peer handheld electronic devices or said additional one of said peer handheld electronic devices to said handheld electronic device.

12. The method of claim 1, wherein when said at least one of said one or more peer handheld electronic devices (16) is in communication range of said at least one wireless access point (8) after said message (10) has been wirelessly transmitted to said handheld electronic device (2) from said at least one of said one or more of said peer handheld electronic devices, said method further comprises transmitting a signal from said at least one of said one or more of said peer handheld electronic devices to said network through said at least one wireless access point, and in response to receiving said signal, updating a message list in said network showing that said message has been delivered to said handheld electronic device.

13. The method of claim 12, further comprising responsive to updating said message list, stopping all attempts to transmit said message (10) from said network to said handheld electronic device (2).

## Patentansprüche

1. Verfahren in einem System mit einem Netzwerk (4) und zumindest einem drahtlosen Zugangspunkt (8) in elektronischer Kommunikation mit dem Netzwerk, wobei eine handgehaltene bzw. tragbare elektronische Vorrichtung (2) und eine Vielzahl von anderen (peer) handgehaltenen bzw. tragbaren elektronischen Vorrichtungen (16) an dem System registriert sind, zum Übertragen einer Nachricht (10) an die tragbare elektronische Vorrichtung (2), wenn die tragbare elektronische Vorrichtung (2) nicht in einem Kommunikationsbereich des zumindest einen drahtlosen Zugangspunkts (8) ist, wobei das Verfahren aufweist:
Versuchen, die Nachricht (10) von dem Netzwerk zu der tragbaren elektronischen Vorrichtung (2) durch den zumindest einen drahtlosen Zugangspunkt (8) drahtlos zu übertragen;
drahtloses Übertragen der Nachricht (10) von dem zumindest einen drahtlosen Zugangspunkt (8) zu einer oder mehreren anderen (peer) tragbaren elektronischen Vorrichtungen (16), die in einem Kommunikationsbereich des zumindest einen drahtlosen Zugangspunkts ist/sind;
drahtloses Übertragen der Nachricht (10) von zumindest einer der einen oder mehreren der anderen tragbaren elektronischen Vorrichtungen (16) an die tragbare elektronische Vorrichtung (2), wenn die zumindest eine der einen oder mehreren der anderen tragbaren elektronischen Vorrichtungen in einem Kommunikationsbereich der tragbaren elektronischen Vorrichtung ist; und
Löschen der Nachricht (10) aus der einen oder mehreren anderen tragbaren elektronischen Vorrichtungen (16), nachdem die Nachricht an die tragbare elektronische Vorrichtung übertragen wurde.

2. Verfahren gemäß Anspruch 1, das weiter aufweist ein Löschen der Nachricht (10) aus der einen oder den mehreren anderen tragbaren elektronischen Vorrichtungen (16) nach einer vorgegebenen Zeitdauer.

3. Verfahren gemäß Anspruch 1, wobei jede der einen oder mehreren der anderen tragbaren elektronischen Vorrichtungen (16) bis zu einer vorgegebenen Anzahl von zusätzlichen Nachrichten speichert, wobei jede der zusätzlichen Nachrichten vorgesehen ist für eine entsprechende zusätzliche tragbare elektronische Vorrichtung, die in dem Netzwerk registriert ist.

4. Verfahren gemäß Anspruch 1, wobei der tragbaren elektronischen Vorrichtung (2) und der einen oder mehreren anderen tragbaren elektronischen Vorrichtungen (16) jeweils ein Identifizierer zugewiesen ist, und wobei die Nachricht (10) den Identifizierer umfasst, welcher der tragbaren elektronischen Vorrichtung entspricht.

5. Verfahren gemäß Anspruch 1, wobei die eine oder mehrere der anderen tragbaren elektronischen Vorrichtungen (16) eine erste andere tragbare elektronische Vorrichtung und eine oder mehrere zusätzliche andere tragbare elektronische Vorrichtungen aufweist/aufweisen, wobei die zumindest eine der einen oder mehreren der anderen tragbaren elektronischen Vorrichtungen die erste andere tragbare elektronische Vorrichtung ist, und wobei das Verfahren weiter aufweist ein Verhindern einer Übertragung der Nachricht (10) von der einen oder mehreren anderen tragbaren elektronischen Vorrichtungen an die tragbare elektronische Vorrichtung (2), nachdem die Nachricht von der ersten anderen tragbaren elektronischen Vorrichtung an die tragbare elektronische Vorrichtung übertragen wurde.

6. Verfahren gemäß Anspruch 1, das weiter aufweist ein Verhindern einer Übertragung der Nachricht (10) von dem Netzwerk an die tragbare elektronische Vorrichtung (2) durch den zumindest einen drahtlosen Zugangspunkt (8), wenn die tragbare elektronische Vorrichtung in einem Kommunikationsbereich des zumindest einen drahtlosen Zugangspunkt ist, nachdem die Nachricht von der zumindest einen der einen oder mehreren der anderen tragbaren elektronischen Vorrichtungen an die tragbare elektronische Vorrichtung übertragen wurde.

7. Verfahren gemäß Anspruch 1, wobei, wenn die tragbare elektronische Vorrichtung (2) in einem Kommunikationsbereich des zumindest einen drahtlosen Zugangspunkt (8) ist, das Verfahren weiter aufweist ein Übertragen eines Signals von der tragbaren elektronischen Vorrichtung an das Netzwerk durch den zumindest einen drahtlosen Zugangspunkt und als Reaktion auf einen Empfang des Signals Aktualisieren einer Nachrichtenliste in dem Netzwerk, die zeigt, dass die Nachricht an die tragbare elektronische Vorrichtung geliefert wurde.

8. Verfahren gemäß Anspruch 7, das weiter aufweist, als Reaktion auf die Aktualisierung der Nachrichtenliste, Anhalten aller Versuche, die Nachricht von dem Netzwerk an die tragbare elektronische Vorrichtung (2) zu übertragen.

9. Verfahren gemäß Anspruch 1, das vor dem Schritt des drahtlosen Übertragens der Nachricht (10) von zumindest einer der einen oder mehreren anderen tragbaren elektronischen Vorrichtungen (16) weiter den Schritt aufweist:
Übertragen eines Signals von der tragbaren elektronischen Vorrichtung an die zumindest eine der einen oder mehreren anderen tragbaren elektronischen Vorrichtungen, wobei das Signal die zumindest eine der einen oder mehreren anderen tragbaren elektronischen Vorrichtungen anweist, den Schritt des drahtlosen Übertragens zu initiieren.

10. Verfahren gemäß Anspruch 1, wobei die Nachricht (10) verschlüsselt ist.

11. Verfahren gemäß Anspruch 1, wobei, wenn eine erste der einen oder mehreren der tragbaren elektronischen Vorrichtungen (16) in einem Kommunikationsbereich einer zusätzlichen der anderen tragbaren elektronischen Vorrichtungen ist, das Verfahren weiter aufweist ein drahtloses Übertragen der Nachricht (10) von der ersten der einen oder mehreren der anderen tragbaren elektronischen Vorrichtungen an die zusätzliche der anderen tragbaren elektronischen Vorrichtungen, und wobei der Schritt des drahtlosen Übertragens der Nachricht von zumindest einer der einen oder mehreren anderen tragbaren elektronischen Vorrichtungen an die tragbare elektronische Vorrichtung ein drahtloses Übertragen der Nachricht von zumindest einer der einen oder mehreren der anderen tragbaren elektronischen Vorrichtungen oder der zusätzlichen der anderen tragbaren elektronischen Vorrichtungen an die tragbare elektronische Vorrichtung aufweist.

12. Verfahren gemäß Anspruch 1, wobei, wenn die zumindest eine der einen oder mehreren anderen tragbaren elektronischen Vorrichtungen (16) in einem Kommunikationsbereich des zumindest einen drahtlosen Zugangspunkts (8) ist, nachdem die Nachricht (10) von der zumindest einen der einen oder mehreren der anderen tragbaren elektronischen Vorrichtungen an die tragbare elektronische Vorrichtung (2) drahtlos übertragen wurde, das Verfahren weiter aufweist ein Übertragen eines Signals von der zumindest einen der einen oder mehreren der anderen tragbaren elektronischen Vorrichtungen an das Netzwerk durch den zumindest einen drahtlosen Zugangspunkt, und als Reaktion auf einen Empfang dieses Signals, Aktualisieren einer Nachrichtenliste in dem Netzwerk, die zeigt, dass die Nachricht an die tragbare elektronische Vorrichtung geliefert wurde.

13. Verfahren gemäß Anspruch 12, das weiter aufweist, als Reaktion auf die Aktualisierung der Nachrichtenliste, Anhalten aller Versuche, die Nachricht (10) von dem Netzwerk an die tragbare elektronische Vorrichtung (2) zu übertragen.

## Revendications

1. Procédé d'émission d'un message (10) vers un dispositif électronique portatif (2), dans un système comprenant un réseau (4) et au moins un point d'accès sans fil (8) en communication électronique avec ledit réseau, lorsque ledit dispositif électronique portatif n'est pas à portée de communication dudit au moins un point d'accès sans fil (8), dans lequel ledit dispositif électronique portatif (2) et une pluralité de dispositifs électroniques portatifs homologues (16) sont enregistrés auprès dudit système, comprenant les étapes consistant à :
tenter d'émettre sans fil ledit message (10) entre ledit réseau et ledit dispositif électronique portatif (2), via ledit au moins un point d'accès sans fil (8) ;
émettre sans fil ledit message (10) entre ledit au moins un point d'accès sans fil (8) et un ou plusieurs des dispositifs électroniques portatifs homologues (16) qui se trouvent à portée de communication dudit au moins un point d'accès sans fil ;
émettre sans fil ledit message (10) entre au moins l'un desdits un ou plusieurs dispositifs électroniques portatifs homologues (16) vers ledit dispositif électronique portatif (2) lorsqu'au moins un desdits un ou plusieurs dispositifs électroniques portatifs homologues se trouve à portée de communication dudit dispositif électronique portatif ; et
supprimer ledit message (10) dans lesdits un ou plusieurs dispositifs électroniques portatifs homologues (16) après que ledit message a été émis vers ledit dispositif électronique portatif.

2. Procédé selon la revendication 1, comprenant en outre l'étape consistant à supprimer ledit message (10) dans lesdits un ou plusieurs dispositifs électroniques portatifs homologues (16) après un intervalle de temps prédéterminé.

3. Procédé selon la revendication 1, dans lequel chacun desdits un ou plusieurs dispositifs électroniques portatifs homologues (16) stocke jusqu'à un nombre prédéterminé de messages supplémentaires, chacun desdits messages supplémentaires étant destiné à un dispositif électronique portatif supplémentaire correspondant enregistré auprès dudit réseau.

4. Procédé selon la revendication 1, dans lequel un identificateur est attribué audit dispositif électronique portatif (2) et auxdits un ou plusieurs dispositifs électroniques portatifs homologues (16) et dans lequel ledit message (10) comprend ledit identificateur qui correspond audit dispositif électronique portatif.

5. Procédé selon la revendication 1, dans lequel lesdits un ou plusieurs dispositifs électroniques portatifs homologues (16) comprennent un premier dispositif électronique portatif homologue et un ou plusieurs dispositifs électroniques portatifs homologues supplémentaires, dans lequel ledit au moins un dispositif parmi lesdits un ou plusieurs dispositifs électroniques portatifs homologues est appelé premier dispositif électronique portatif homologue et dans lequel le procédé comprend en outre l'étape consistant à empêcher l'émission dudit message (10) à partir desdits un ou plusieurs dispositifs électroniques portatifs homologues supplémentaires vers ledit dispositif électronique portatif (2) après que ledit message a été émis vers ledit dispositif électronique portatif par ledit premier dispositif électronique portatif homologue.

6. Procédé selon la revendication 1, comprenant en outre l'étape consistant à empêcher l'émission dudit message (10) entre ledit réseau et ledit dispositif électronique portatif (2) via ledit au moins un point d'accès sans fil (8), lorsque ledit dispositif électronique portatif est à portée de communication dudit au moins un point d'accès sans fil après que ledit message a été émis vers ledit dispositif électronique portatif à partir dudit au moins un dispositif parmi lesdits un ou plusieurs dispositifs électroniques portatifs homologues.

7. Procédé selon la revendication 1, dans lequel, lorsque ledit dispositif électronique portatif (2) est à portée de communication dudit au moins un point d'accès sans fil (8), le procédé comprend en outre les étapes consistant à émettre un signal entre ledit dispositif électronique portatif et ledit réseau via ledit au moins un point d'accès sans fil et, à la suite de la réception dudit signal, à mettre à jour une liste des messages dans ledit réseau, pour indiquer que ledit message a été acheminé vers ledit dispositif électronique portatif.

8. Procédé selon la revendication 7, comprenant en outre, après la mise à jour de ladite liste de messages, l'étape consistant à arrêter toutes les tentatives d'émission dudit message entre ledit réseau et ledit dispositif électronique portatif (2).

9. Procédé selon la revendication 1, comprenant en outre, avant l'étape d'émission sans fil dudit message (10) à partir d'au moins un dispositif parmi lesdits un ou plusieurs dispositifs électroniques portatifs homologues (16), l'étape consistant à :
émettre un signal entre ledit dispositif électronique portatif et ledit au moins un dispositif parmi lesdits un ou plusieurs dispositifs électroniques portatifs homologues, ledit signal ordonnant audit au moins un dispositif parmi lesdits un ou plusieurs dispositifs électroniques portatifs homologues de lancer ladite étape d'émission sans fil.

10. Procédé selon la revendication 1, dans lequel ledit message (6) est chiffré.

11. Procédé selon la revendication 1, dans lequel, lorsqu'un premier dispositif, parmi lesdits un ou plusieurs dispositifs électroniques portatifs (16), se trouve à portée de communication d'un autre dispositif parmi lesdits dispositifs électroniques portatifs homologues, le procédé comprend en outre l'étape consistant à émettre sans fil ledit message (10) entre ledit premier parmi lesdits un ou plusieurs dispositifs électroniques portatifs homologues et ledit dispositif supplémentaire parmi lesdits dispositifs électroniques portatifs homologues et dans lequel ladite étape d'émission sans fil dudit message entre au moins un dispositif parmi lesdits un ou plusieurs dispositifs électroniques portatifs homologues et ledit dispositif électronique portatif comprend l'émission sans fil dudit message entre au moins un dispositif parmi lesdits un ou plusieurs dispositifs électroniques portatifs homologues ou ledit dispositif supplémentaire parmi lesdits un ou plusieurs dispositifs électroniques portatifs homologues et ledit dispositif électronique portatif.

12. Procédé selon la revendication 1, dans lequel, lorsque ledit au moins un dispositif parmi lesdits un ou plusieurs dispositifs électroniques portatifs homologues (16) est à portée de communication avec ledit au moins un point d'accès sans fil (8) après que ledit message (10) a été émis sans fil vers ledit dispositif électronique portatif (2) à partir dudit au moins un dispositif parmi lesdits un ou plusieurs dispositifs électroniques portatifs homologues, ledit procédé comprend en outre les étapes consistant à émettre un signal entre ledit au moins un dispositif parmi lesdits un ou plusieurs dispositifs électroniques portatifs homologues et ledit réseau via ledit au moins un point d'accès sans fil et, après réception dudit signal, à mettre à jour une liste de messages sur ledit réseau, indiquant que ledit message a été acheminé vers ledit dispositif électronique portatif.

13. Procédé selon la revendication 12, comprenant en outre, après la mise à jour de ladite liste de messages, l'étape consistant à cesser toutes les tentatives d'émission dudit message (10) entre ledit réseau et ledit dispositif électronique portatif (2).
